# EUROPEAN PATENT APPLICATION

(11) **EP 2 063 626 A1**
(43) Date of publication of application: **27.05.2009**
(21) Application number: 08162784.6
(22) Date of filing: 21.08.2008
(51) Int. Cl.: H04N 5/00

(54) **Content management method, and broadcast receiving apparatus and video apparatus using the same**

(30) Priority: 30.10.2007 KR 20070109816
(71) Applicant: Samsung Electronics Co., Ltd., Suwon-si, Gyeonggi-do 442-742 (KR)
(72) Inventor: Jo, Sung-baik, 652-903, Sinnamusil 6 danji,, Gyeonggi-do (KR); Kim, Ji-eun, 208-1201, Sin LG Xi 2nd Ap., Gyeonggi-do (KR); Park, Ji-hyun, 201, NB House, Seoul (KR); KIM, Il-kwon, 201, 1029-5, Yeongtong-dong, Gyeonggi-do (KR); Kim, Joon-hwan, 211-1906, Pos Home Town Ap., Gyeonggi-do (KR); Kim, Hyun-jin 102-101, Ilsin Ap., Gwangju-city (KR)
(74) Representative: Rooney, John-Paul

(57) **Abstract**

A content management method and a broadcast receiving apparatus (200) and a video apparatus (100) using the method are provided. The content management method of the broadcast receiving apparatus (200) includes receiving content satisfying content receiving conditions input by a user among content stored in an external apparatus (100) wirelessly connected to the broadcast receiving apparatus (200), and storing the received content.

## Description

### BACKGROUND OF THE INVENTION

### 1. Field of the Invention

Apparatuses and methods consistent with the present invention relate to broadcast reception and content management, and more particularly, to managing content stored a broadcast receiving apparatus and a video apparatus.

### 2. Description of the Related Art

The recent development of broadcasting technologies and video compression technologies has enabled users to access a wide variety of content. Additionally, the development of storage media provides the means to record and store a large amount of content in video apparatuses.

Furthermore, it is possible to copy content stored in a video apparatus to another video apparatus due to the development of communication technologies. Such copying of content between video apparatuses may be performed collectively. That is, all content stored in a video apparatus may be copied and moved to another apparatus. Accordingly, when undesired content is copied, a user needs to arrange the copied content again, which causes inconvenience to the user.

### SUMMARY OF THE INVENTION

According to the present invention there is provided methods and apparatuses as set forth in the appended claims. Other features of the invention will be apparent from the dependent claims, and the description which follows.

Exemplary embodiments of the present invention overcome the above disadvantages and other disadvantages not described above. Also, the present invention is not required to overcome the disadvantages described above, and an exemplary embodiment of the present invention may not overcome any of the problems described above.

An aspect of the present invention provides a content management method and a broadcast receiving apparatus using the method, in which content satisfying content receiving conditions input by a user may be received and stored in order to manage content more conveniently and efficiently.

Another aspect of the present invention also provides a content management method and a video apparatus using the method in which content selected by a user from among stored content may be transmitted to a broadcast receiving apparatus.

A further aspect of the present invention provides a content management method and a broadcast receiving apparatus using the method in which a broadcast together with content received from an external apparatus, which is wirelessly connected to the broadcast receiving apparatus, may be displayed on a screen.

According to an aspect of the present invention, there is provided a content management method of a broadcast receiving apparatus which provides a user with a received broadcast, the method comprising receiving content receiving conditions input by the user; requesting content satisfying the content receiving conditions input by the user among content stored in an external apparatus wirelessly connected to the broadcast receiving apparatus from the external apparatus; and wirelessly receiving the requested content from the external apparatus and storing the received content.

The content receiving conditions may be at least one of the type of content to be received from the external apparatus, a file format of content to be received from the external apparatus, and the type of external apparatus from which the content is received.

The method may further comprise playing back specific content while the received content is stored.

The method may further comprise displaying an icon, which indicates information regarding the stored content, while the received content is stored.

According to another aspect of the present invention, there is provided a broadcast receiving apparatus, which provides a user with a received broadcast, comprising a controller which requests content satisfying content receiving conditions input by the user among content stored in an external apparatus wirelessly connected to the broadcast receiving apparatus from the external apparatus; and a storage unit which stores the requested content received from the external apparatus.

The content receiving conditions may be at least one of the type of content to be received from the external apparatus, a file format of content to be received from the external apparatus, and the type of external apparatus from which the content is received.

The controller may cause specific content stored in the storage unit to be played back while the requested content is received and the received content is stored in the storage unit.

The controller may cause an icon, which indicates information regarding the stored content, to be displayed while the requested content is received and the received content is stored in the storage unit.

According to another aspect of the present invention, there is provided a content management method of a video apparatus, which is wirelessly and communicably connected to a broadcast receiving apparatus which provides a user with a received broadcast, the method comprising receiving a user selection of content from among content stored in the video apparatus; and transmitting the content selected by the user to the broadcast receiving apparatus.

The transmitting may comprise transmitting only content for which permission to receive is given by the broadcast receiving apparatus from among the content selected by the user.

The content for which permission to receive is given by the broadcast receiving apparatus may be at least one of content of a specific type, content having a specific file format and content stored in a video apparatus of a specific type.

According to another aspect of the present invention, there is provided a video apparatus, which is wirelessly and communicably connected to a broadcast receiving apparatus which provides a user with a received broadcast, the video apparatus comprising a storage unit which stores content; and a controller which, when content is selected by the user from among the content stored in the storage unit, causes the content selected by the user to be transmitted to the broadcast receiving apparatus.

The controller may transmit to the broadcast receiving apparatus only content for which permission to receive is given by the broadcast receiving apparatus from among the content selected by the user.

The content for which permission to receive is given by the broadcast receiving apparatus may be at least one of content of a specific type, content having a specific file format and content stored in a video apparatus of a specific type.

According to another aspect of the present invention, there is provided a content management method of a broadcast receiving apparatus which provides a user with a received broadcast, the method comprising displaying the received broadcast on a screen; and displaying content received from an external apparatus wirelessly connected to the broadcast receiving apparatus on a portion of the screen.

The displaying the content may comprise classifying and displaying a plurality of pieces of content received respectively from a plurality of external apparatuses wirelessly connected to the broadcast receiving apparatus on a portion of the screen.

The external apparatus may be a personal computer (PC), and the content may be video output from the PC.

The method may further comprise changing a location of the screen on which the content received from the external apparatus is displayed, according to the user's manipulation.

### BRIEF DESCRIPTION OF THE DRAWINGS

The above and/or other aspects of the present invention will be more apparent by describing certain exemplary embodiments of the present invention with reference to the accompanying drawings, in which:
FIG. 1 is a block diagram of an exemplary system to which the present invention is applicable;
FIG. 2 is a detailed block diagram of a digital camera shown in FIG. 1;
FIG. 3 is a detailed block diagram of a digital television (DTV) shown in FIG. 1;
FIG. 4 is a flowchart explaining a content management method of the DTV, according to an exemplary embodiment of the present invention;
FIG. 5 is a diagram showing an example of a category designation menu;
FIG. 6 is a flowchart explaining a content management method of a digital camera, according to another exemplary embodiment of the present invention;
FIG. 7 is a diagram showing an example of a content list;
FIG. 8 is a flowchart explaining a content management method of a DTV, according to another exemplary embodiment of the present invention; and
FIG. 9 is a diagram showing broadcast content in which PC video is processed in a picture-in-picture (PIP) format.

### DETAILED DESCRIPTION OF EXEMPLARY EMBODIMENTS

Certain exemplary embodiments of the present invention will now be described in greater detail with reference to the accompanying drawings.

In the following description, same drawing reference numerals are used for the same elements even in different drawings. The matters defined in the description, such as detailed construction and elements, are provided to assist in a comprehensive understanding of the invention. Thus, it is apparent that the exemplary embodiments of the present invention can be carried out without those specifically defined matters. Also, well-known functions or constructions are not described in detail since they would obscure the invention with unnecessary detail.

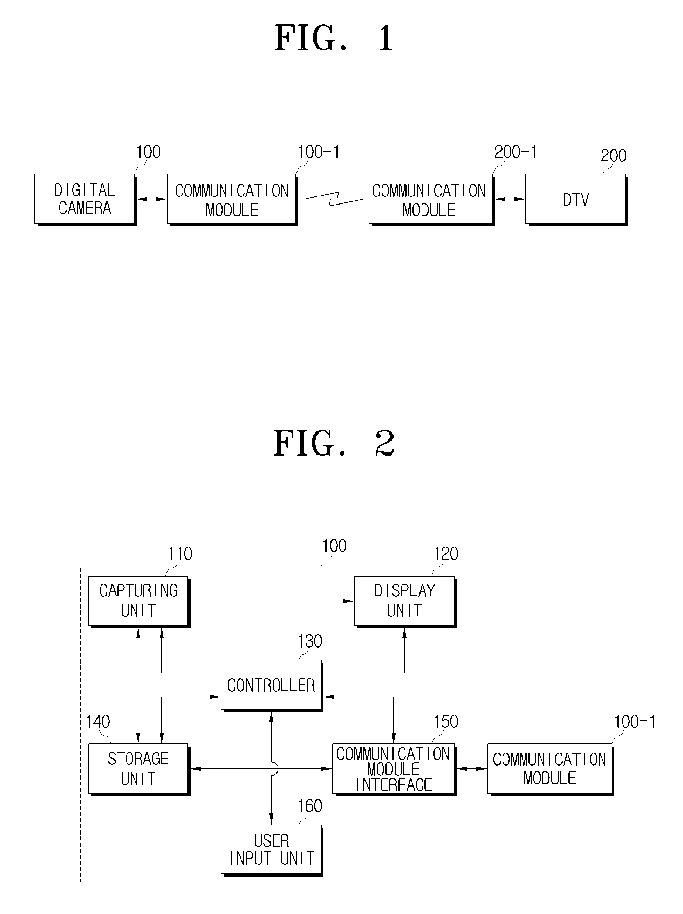

FIG. 1 is a block diagram of an exemplary system to which the present invention is applicable. The system of FIG. 1 is configured by connecting a digital camera 100, communication modules 100-1 and 200-1 and a DTV 200 to enable mutual communication therebetween.

Specifically, in the system of FIG. 1, the digital camera 100 is connected to the DTV 200 via the communication modules 100-1 and 200-1 to enable mutual wireless communication therebetween.

FIG. 2 is a detailed block diagram of the digital camera 100 shown in FIG. 1. In order to facilitate understanding of the present invention, the communication module 100-1 is also shown in FIG. 2.

The digital camera 100 of FIG. 2 comprises a capturing unit 110, a display unit 120, a controller 130, a storage unit 140, a communication module interface 150 and a user input unit 160.

The capturing unit 110 transfers to the display unit 120 a video signal generated by capturing an object. Additionally, the capturing unit 110 compresses the video signal and transfers the compressed video signal to the storage unit 140. The display unit 120 displays video corresponding to the video signal output from the capturing unit 110, so that a user may view the video.

The storage unit 140 stores the compressed video signal output from the capturing unit 110 in a predetermined file format. The compressed video signal stored in the storage unit 140 relates to content generated by the digital camera 100. The communication module interface 150 is communicably connected to the communication module 100-1.

The controller 130 controls operations of the capturing unit 110, display unit 120, storage unit 140 and communication module interface 150 included in the digital camera 100 according to user commands input through the user input unit 160.

Additionally, the controller 130 performs operations in response to requests and commands received via the communication module 100-1 and communication module interface 150 from the DTV 200.

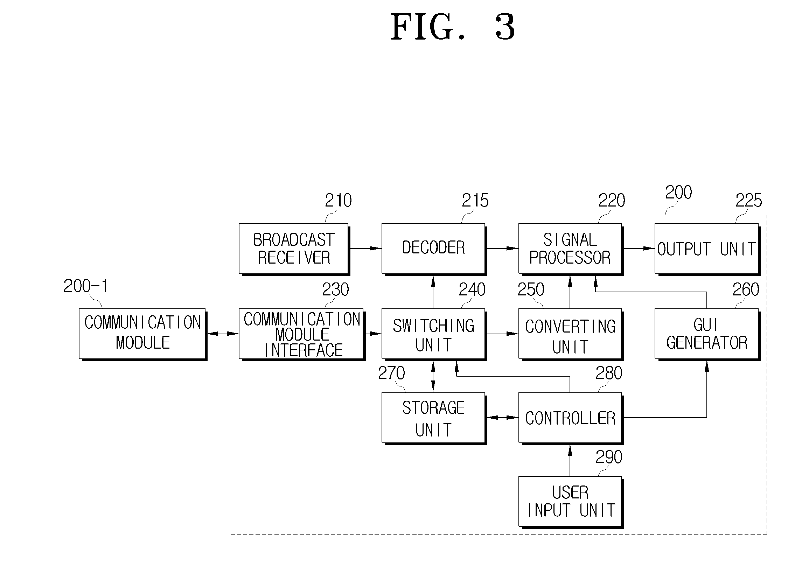

FIG. 3 is a detailed block diagram of the DTV 200 shown in FIG. 1. In order to facilitate understanding of the present invention, the communication module 200-1 is also shown in FIG. 3.

The DTV 200 of FIG. 3 comprises a broadcast receiver 210, a decoder 215, a signal processor 220, an output unit 225, a communication module interface 230, a switching unit 240, a converting unit 250, a graphical user interface (GUI) generator 260, a storage unit 270, a controller 280 and a user input unit 290.

The broadcast receiver 210 receives broadcast content via wire or wirelessly from a broadcast station, and demodulates the received broadcast content. The decoder 215 decodes the broadcast content demodulated by the broadcast receiver 210 or content transferred through the switching unit 240, so that the broadcast content may be decompressed.

The signal processor 220 performs video signal processing, scaling and audio signal processing with respect to the content decoded by the decoder 215 or content output from the converting unit 250.

The GUI generator 260 generates a GUI such as a menu to be shown on a display, and transfers the generated GUI to the signal processor 220. The signal processor 220 then combines the GUI received from the GUI generator 260 with the content.

The output unit 225 outputs the content output from the signal processor 220 via a display (not shown) and a speaker (not shown) to provide the content to a user.

The communication module interface 230 is communicably connected to the communication module 200-1. The converting unit 250 converts content into a format which is able to be processed by the signal processor 220. The storage unit 270 is a storage medium in which content is stored.

The switching unit 240 switches signal flow between the communication module interface 230, decoder 215, converting unit 250 and storage unit 270. Specifically, the switching unit 240 performs a switching operation so that the content received via the communication module interface 230 and communication module 200-1 can be transferred to the decoder 215, the converting unit 250 or the storage unit 270, and performs a switching operation so that the content stored in the storage unit 270 can be transferred to the decoder 215 or the converting unit 250. Additionally, the switching unit 240 performs a switching operation so that requests and commands for the digital camera 100 created by the controller 280 can be transferred to the communication module interface 230, and so that the requests and commands are transferred to the digital camera 100 via the communication module 200-1.

The controller 280 controls the entire operation of the DTV 200 according to user commands input through the user input unit 290. In more detail, the controller 280 controls the switching operations of the switching unit 240 and the GUI generation by the GUI generator 260. Additionally, the controller 280 may request and instruct the digital camera 100 to perform certain operations.

The user input unit 290 may be implemented as any of various kinds of manipulation means disposed on the front of the DTV 200, or as a remote controller, and as a light receiving element for transferring user commands of infrared forms output from a remote controller to the controller 280.

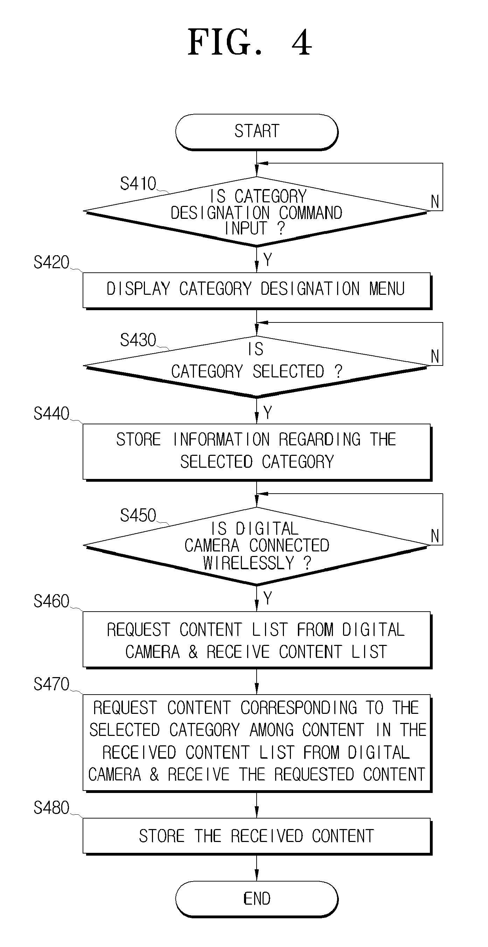

Hereinafter, an exemplary embodiment of the present invention will be described in detail with reference to FIG. 4. FIG. 4 is a flowchart explaining a content management method of the DTV 200, according to the exemplary embodiment of the present invention.

As shown in FIG. 4, if a user inputs a category designation command using the user input unit 290 of the DTV 200 (operation S410-Y), the controller 280 controls the GUI generator 260 to generate a category designation menu and display the generated category designation menu on a screen (operation S420). Accordingly, the category designation menu may be displayed on output unit 225.

Here, the category designation command refers to a user command to designate a category of content to be received from an external apparatus disposed in the vicinity of the DTV 200. In this situation, the digital camera 100 is used as an external apparatus disposed in the vicinity of the DTV 200, as shown in FIG. 1.

Additionally, a category may be a type of content, such as a moving picture, a still picture and an audio, or may be a file format, such as the Joint Photographic Experts Group (JPEG) format or the Moving Picture Experts Group (MPEG) format.

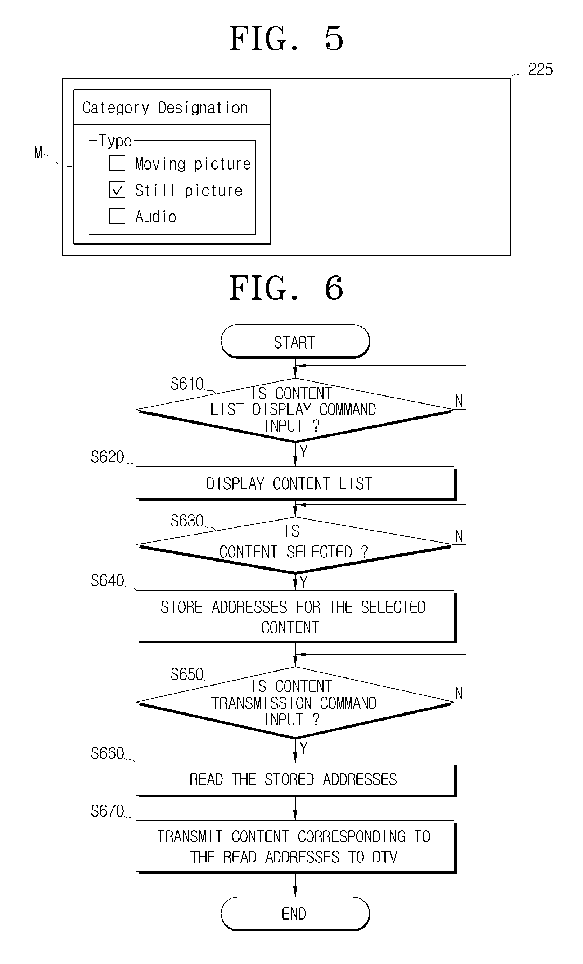

The category designation menu is a GUI used to designate a category. FIG. 5 shows an example of a category designation menu M displayed on the output unit 225 after operation S420, when the content is categorized according to the type of content.

If the user selects a category from the category designation menu M (operation S430-Y), the controller 280 stores information regarding the selected category in the storage unit 270 (operation S440).

Although only a still picture category is selected by the user in FIG. 5, various types of category may be selected.

If it is determined that the digital camera 100 is wirelessly connected to the DTV 200 via the communication module 200-1 and communication module interface 230 (operation S450-Y), the controller 280 requests a content list from the digital camera 100 via the switching unit 240, communication module 200-1 and communication module interface 230, and then receives the content list from the digital camera 100 (operation S460).

Here, the content list is a list of information regarding the content stored in the digital camera 100.

The controller 280 also requests content corresponding to the category selected in operation S430 (that is, the category stored at operation S440) among the content in the content list received in operation S460 from the digital camera 100, and then receives the requested content from the digital camera 100 (operation S470).

Subsequently, the controller 280 controls the switching unit 240 so that the received content is transferred to the storage unit 270 and stored in the storage unit 270 (operation S480).

During operation S480, the controller 280 also controls the GUI generator 260 to generate an icon indicating the category corresponding to the content stored in the storage unit 270 and display the generated icon on the screen. Accordingly, the user may know the category of the content currently received and stored.

The method for managing content using the DTV 200 has been described in detail according to the exemplary embodiment of the present invention.

In this exemplary embodiment of the present invention, the category is set according to the type of content, but the content may be categorized according to the file format.

Additionally, content receiving conditions may be used in place of a category in order to manage content. The type of external apparatus in which content is stored may also be determined according to content receiving conditions. For example, the DTV 200 may receive and store content stored from a digital camera or a PC, rather than from a personal multimedia player (PMP).

Furthermore, during operation S480, the specific content stored in the storage unit 270 may be played back. In this situation, if content which the user desires to play back is compressed, the controller 280 may control the switching unit 240 to transfer the content to the decoder 215, and if not, the controller 280 may control the switching unit 240 to transfer the content to the converting unit 250.

Although only the digital camera 100 is connected to the DTV 200 in the exemplary embodiment of the present invention for convenience of description, various other apparatuses may be connected to the DTV 200.

Hereinafter, another exemplary embodiment of the present invention will be described in detail with reference to FIG. 6. FIG. 6 is a flowchart explaining a content management method of the digital camera 100, according to the exemplary embodiment of the present invention.

In FIG. 6, if the user inputs a content list display command using the user input unit 160 of the digital camera 100 (operation S610-Y), the controller 160 may generate a content list and display the generated content list on the display unit 120 (operation S620).

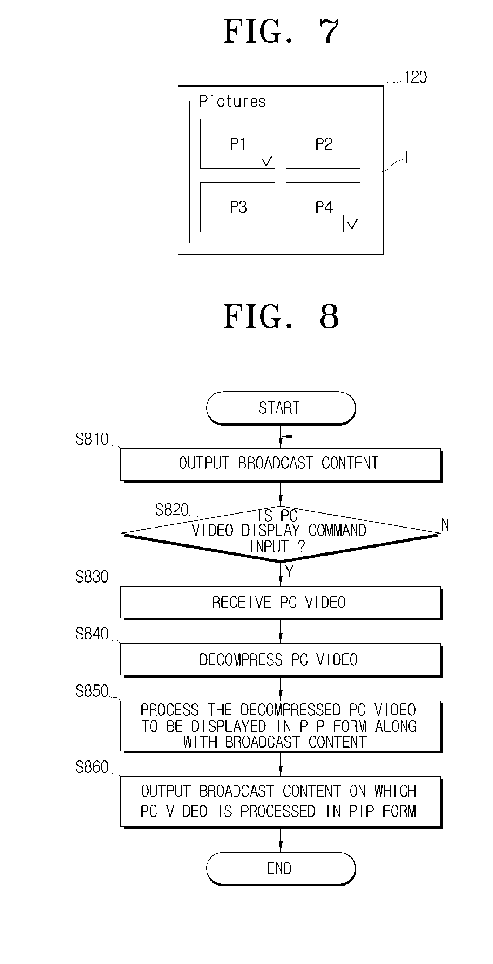

Here, the content list display command is a user command to show the content list, in which content stored in the storage unit 140 of the digital camera 100 is listed. FIG. 7 shows an example of a content list L displayed on the display unit 120 as a result of operation S620.

If the user selects content from the content list L (operation S630-Y), the controller 130 stores an address for each respective piece of content selected by the user in the storage unit 140 (operation S640).

As shown in FIG. 7, content P1 and content P2 with a check mark are content selected by the user.

If the user inputs a content transmission command (operation S650-Y), the controller 130 reads the addresses stored in the storage unit 140 in operation S640, namely, the addresses for the content selected by the user in operation S630 (operation S660).

The controller 130 then causes the content individually stored in the read addresses to be output from the storage unit 140 and transmitted to the DTV 200 via the communication module 100-1 and communication module interface 150 (operation S670).

The method for managing content using the digital camera 100 has been described in detail according to the exemplary embodiment of the present invention.

In this exemplary embodiment of the present invention, it is assumed for convenience of description that all the content selected by the user is transmitted to the DTV 200, but the present invention is not limited thereto. Accordingly, the digital camera 100 may transmit only content for which permission to receive is given by the DTV 200, to the DTV 200.

Here, the content for which permission to receive is given by the DTV 200 may be content of a specific type (for example, a still picture), content having a specific file format (for example, JPEG), or content stored in a video apparatus of a specific type (for example, a digital camera or a PC).

Hereinafter, another exemplary embodiment of the present invention will be described in detail with reference to FIG. 8. FIG. 8 is a flowchart explaining another content management method of the DTV 200, according to the exemplary embodiment of the present invention.

In this exemplary embodiment of the present invention, the DTV 200 is wirelessly connected to a PC (not shown) instead of the digital camera 100.

In FIG. 8, the DTV 200 outputs a broadcast currently received and provides the output broadcast to the user (operation S810). Specifically, in operation S81 0, the broadcast content received by the broadcast receiver 210 is decompressed by the decoder 215, processed by the signal processor 220 and output by the output unit 225.

Subsequently, if a PC video display request is received from the PC via the communication module 200-1 and communication module interface 230 (operation S820-Y), the controller 280 controls the switching unit 240 so that PC video received from the PC via the communication module 200-1 and communication module interface 230 is transferred to the decoder 215 (operation S830).

The decoder 215 then decompresses the received PC video (operation S840). The signal processor 220 processes the decompressed PC video so that the PC video may be displayed in a picture-in-picture (PIP) form along with broadcast content to be output (operation S850). The output unit 225 then outputs the broadcast content on which the PC video is processed in a PIP form, to provide the output broadcast content to the user (operation S860).

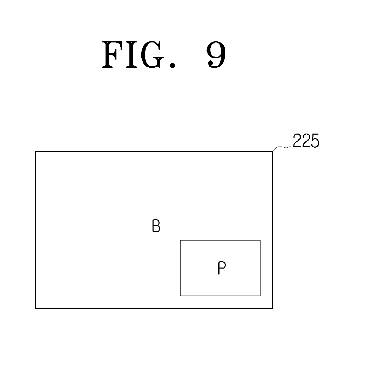

FIG. 9 shows broadcast content B in which PC video P is processed in a PIP format displayed on the output unit 225 as a result of operation S860. In order to prevent PC video P from covering the main portion of the broadcast content B, the output location of PC video P may be changed according to a user's manipulation.

The method for managing content using the DTV 200 has been described in detail according to the exemplary embodiment of the present invention.

In this exemplary embodiment of the present invention, the PC video is received from only a single PC, but the present invention is applicable to a situation in which a plurality of PC videos may be simultaneously received from a plurality of PCs. In this situation, the plurality of PC videos may be displayed in PIP forms together with the broadcast content.

The apparatuses according to the exemplary embodiments of the present invention may be replaced by other apparatuses. For example, other types of broadcast receiving apparatuses may be used instead of the DTV, and various types of video apparatuses may be used instead of the digital camera and the PC.

The communication modules 100-1 and 200-1 may be mounted inside the digital camera 100 and the DTV 200, respectively.

As described above, according to the exemplary embodiments of the present invention, it is possible to receive and store content satisfying content receiving conditions input by a user, to transmit content selected by the user from among the stored content to a broadcast receiving apparatus, or to display a broadcast together with content received from a wirelessly connected external apparatus on a screen, and the user may thus manage content more conveniently and efficiently.

The foregoing exemplary embodiments and advantages are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A content management method of a broadcast receiving apparatus (200), the method **characterised by**:
receiving content receiving conditions;
requesting content satisfying the content receiving conditions among content stored in an external apparatus (100) wirelessly connected to the broadcast receiving apparatus (200) from the external apparatus (100); and
wirelessly receiving the requested content from the external apparatus (100) and storing the received content.

2. The method as claimed in claim 1, wherein the content receiving conditions comprise at least one of a type of content to be received from the external apparatus (100), a file format of content to be received from the external apparatus (100), and a type of external apparatus (100) from which the content is received.

3. The method as claimed in any of claims 1 and 2, further comprising playing back specific content while the received content is stored.

4. The method as claimed in any of claims 1 to 3, further comprising displaying an icon, which indicates information regarding the stored content, while the received content is stored.

5. The method as claimed in any of claims 1 to 4, further comprising :
displaying a received broadcast on a screen; and
displaying the content on a portion of the screen.

6. The method as claimed in claim 5, wherein the displaying the content comprises classifying and displaying a plurality of pieces of content received respectively from a plurality of external apparatuses wirelessly connected to the broadcast receiving apparatus (200) on a portion of the screen.

7. The method as claimed in any of claims 1 to 6, further comprising, changing a location of the screen on which the content received from the external apparatus is displayed, according to a user's manipulation.

8. A broadcast receiving apparatus (200), **characterised by**:
a controller (280) which requests content satisfying content receiving conditions among content stored in an external apparatus (100) wirelessly connected to the broadcast receiving apparatus (200) from the external apparatus (100); and
a storage unit (270) which stores the requested content received from the external apparatus.

9. The broadcast receiving apparatus (200) as claimed in claim 8, wherein the controller causes specific content stored in the storage unit to be played back while the requested content is received and the received content is stored in the storage unit.

10. The broadcast receiving apparatus (200) as claimed in any of claims 8 and 9, wherein the controller causes an icon, which indicates information regarding the stored content, to be displayed while the requested content is received and the received content is stored in the storage unit.

11. A content management method of a video apparatus (100), which is wirelessly and communicably connected to a broadcast receiving apparatus (200), the method **characterised by**:
receiving a selection of content from among content stored in the video apparatus (100); and
transmitting the selected content to the broadcast receiving apparatus (200).

12. The method as claimed in claim 11, wherein the transmitting comprises transmitting only content for which permission to receive is given by the broadcast receiving apparatus (200) from among the selected content.

13. The method as claimed in any of claims 11 and 12, wherein the content for which permission to receive is given by the broadcast receiving apparatus (200) comprises at least one of content of a specific type, content having a specific file format and content stored in a video apparatus (100) of a specific type.

14. A video apparatus (100), which is wirelessly and communicably connected to a broadcast receiving apparatus (200), the video apparatus comprising:
a storage unit (140) which stores content;
**characterised by**:
a controller (130) which, if content is selected from among the content stored in the storage unit, causes the selected content to be transmitted to the broadcast receiving apparatus (200).

15. The video apparatus (100) as claimed in claim 14, wherein the controller transmits to the broadcast receiving apparatus (200) only content for which permission to receive is given by the broadcast receiving apparatus (200) from among the selected content.
